# EUROPEAN PATENT SPECIFICATION

(11) **EP 4 589 233 B1**
(45) Date of publication and mention of the grant of the patent: **25.02.2026**
(21) Application number: 24209284.9
(22) Date of filing: 28.10.2024
(51) Int. Cl.: F26B 3/30

(54) **ELECTRODE MANUFACTURING SYSTEM AND METHOD FOR MANUFACTURING AN ELECTRODE**
ELEKTRODENHERSTELLUNGSSYSTEM UND VERFAHREN ZUR HERSTELLUNG EINER ELEKTRODE
SYSTÈME DE FABRICATION D'ÉLECTRODE ET PROCÉDÉ DE FABRICATION D'ÉLECTRODE

(30) Priority: 22.01.2024 KR 20240009671
(43) Date of publication of application: 23.07.2025
(73) Proprietor: SK Innovation Co., Ltd., Seoul 03188 (KR); SK On Co., Ltd., Seoul 03161 (KR)
(72) Inventor: SEO, Jang Won, Daejeon 34124 (KR); LEE, Jun Young, Daejeon 34124 (KR); KIM, Dae Hee, Daejeon 34124 (KR); KIM, Ju Hyun, Daejeon 34124 (KR)
(74) Representative: Prüfer & Partner mbB Patentanwälte · Rechtsanwälte

(56) References cited:
- CN-A- 116 157 210
- KR-A- 20220 030 745
- KR-B1- 102 347 351

## Description

### TECHNICAL FIELD

This disclosure relates to a system for manufacturing an electrode for a secondary battery.

### BACKGROUND

Unlike primary batteries, secondary batteries may be charged and discharged, and thus may be applied to devices within various fields such as digital cameras, mobile phones, notebook computers, hybrid vehicles, and electric vehicles. Recently, among secondary batteries, a large amount of research into lithium secondary batteries, having high energy density and discharge voltages, has been actively conducted.

In general, electrode plates for lithium secondary batteries may be manufactured using a process of coating a positive or negative electrode active material on a substrate to be coated (in the following also referred to as "a coating substrate"), such as an aluminum or copper sheet, and drying the active material.

The coating process and the drying process may have a significant impact on the quality of secondary batteries. However, in the related art, a phenomenon may occur in which an active material of an electrode on which a drying process is performed is partially dried or excessively dried for various reasons. Such a phenomenon may be exacerbated when a travelling speed of the electrode is increased.

Accordingly, there is a need for a device or manufacturing system capable of evenly drying electrodes.

KR20220030745A discloses an electrode drying device that includes an oven that provides a space in which an electrode having a structure in which an electrode active material layer is formed on at least one surface of a current collector is dried, and has at least one infrared heater therein, and at least one shielding frame that is disposed between the infrared heater and the electrode active material layer, and controls an area to which the surface of the electrode is exposed to infrared rays.

### SUMMARY

According to an aspect of the present disclosure, it is possible to provide an electrode manufacturing system capable of maintaining an even drying performance, and accordingly capable of providing an even dryness and/or a uniformly coated coating material on a substrate to be coated (coating substrate). The electrode manufacturing system of the present disclosure is suitable for manufacturing secondary battery electrodes by coating a positive or negative electrode active material on a suitable substrate to be coated (the "coating substrate").

A secondary battery manufactured using the electrode manufacturing system according to the present disclosure may be widely applied in the field of green technology, such as electric vehicles, battery charging stations, and other battery-utilizing solar power generation schemes, wind power generation schemes, or similar devices. In addition, the secondary battery manufactured using the electrode manufacturing system according to the present disclosure may be used in eco-friendly electric vehicles, hybrid vehicles, and the like, to prevent climate change by suppressing air pollution and greenhouse gas emissions.

In a general aspect of the present invention, an electrode manufacturing system includes a coating portion configured to coat a coating material on a coating substrate traveling along a path, and a drying portion configured to dry the coating material. The drying portion includes at least one linear infrared lamp configured to irradiate the coating material with infrared light, and opposite ends of the infrared lamp are disposed to be vertically aligned with opposite edges of the coating material. The at least one infrared lamp is disposed to be rotatable along a rotational axis formed in a direction, perpendicular to a direction of a surface of the coating substrate.

In the electrode manufacturing system, the length of the linear infrared lamp may be configured or formed to be the same as a width W of the coating material coated on the coating substrate.

A separation distance between the infrared lamp and the coating material may be 5 cm to 10 cm.

The rotational axis may be disposed in a central portion of the infrared lamp in a longitudinal direction.

The infrared lamp may be disposed in a diagonal direction, oblique to a width direction of the coating material, or may be disposed to be parallel to the width direction of the coating material.

The infrared lamp may include a first lamp rotating on a first rotational axis, and a second lamp rotating on a second rotational axis. The first rotational axis and the second rotational axis may be disposed on a straight line, parallel to a width direction of the coating material.

The first rotational axis may be formed at one end of the first lamp, and the second rotational axis may be formed at the other end of the second lamp. The other end of the first lamp and one end of the second lamp may be positioned on the opposite edges of the coating material, respectively.

The first lamp and the second lamp may be disposed in a "V" shape, or may be disposed to form a straight line.

The drying portion may further include a hot air supply device configured to supply hot air to the coating material.

The hot air supply device may include a plurality of hot air supply nozzles configured to spray the hot air to the coating material. In the drying portion, the plurality of hot air supply nozzles and a plurality of infrared lamps may be alternately disposed in a direction of traveling of the coating material.

According to an embodiment of the electrode manufacturing system, the coating material may be a positive electrode active material or a negative electrode active material. According to a further embodiment of the electrode manufacturing system, the coating substrate may be a secondary battery electrode substrate; and the coating substrate may include an aluminum sheet or a copper sheet.

According to a further aspect of the present disclosure, the electrode manufacturing system of the present disclosure may be used for manufacturing a secondary battery electrode.

In a further general aspect, the present invention provides a method for manufacturing an electrode, in particular a secondary battery electrode, comprising the steps of coating a coating material on a coating substrate traveling along a path; and drying the coating material coated on the coating substrate; wherein the drying step includes drying by at least one linear infrared lamp, which irradiates the coating material with infrared light, wherein the opposite ends of at least one of the linear infrared lamp(s) are aligned with opposite edges of the coating material, and wherein the at least one infrared lamp is disposed to be rotatable along a rotational axis formed in a direction, perpendicular to a direction of a surface of the coating substrate.

In further embodiments of the method for manufacturing an electrode, the length of the linear infrared lamp may be configured or formed to be the same as a width W of the coating material coated on the coating substrate; or the opposite ends of the projected infrared lamp correspond to the opposite edges of the coating material.

According to an embodiment of the disclosed technology, even when traveling speed of a coating substrate to which a coating material is applied is increased, the coating material may be evenly dried, thereby increasing product yield.

### BRIEF DESCRIPTION OF DRAWINGS

Certain aspects, features, and advantages of the present disclosure are illustrated by the following detailed description with reference to the accompanying drawings.
FIG. 1 is a schematic diagram illustrating an electrode manufacturing system according to an embodiment of the disclosed technology.
FIG. 2 is a diagram illustrating the drying portion of FIG. 1.
FIG. 3 is a cross-sectional view taken along line I-I' of FIG. 2.
FIG. 4 is a cross-sectional view taken along line II-II' of FIG. 3.
FIG. 5 is a graph illustrating thicknesses of a coating material according to various types of infrared lamps.
FIG. 6A to 6C are diagrams illustrating each experimental examples of FIG. 3.
FIGS. 7 and 8 are schematic diagrams illustrating an electrode manufacturing system according to another embodiment.
FIGS. 9 and 10 are schematic diagrams illustrating an electrode manufacturing system according to another embodiment.

### DETAILED DESCRIPTION

Features of the present disclosure disclosed in this patent document are described by example embodiments with reference to the accompanying drawings.

The present disclosure can be implemented in some embodiments to provide an electrode manufacturing system. In the present disclosure, the term "coating substrate" means a substrate which is subject to the coating process, or which respectively forms the coated substrate, of the electrode manufacturing system. In the present disclosure, a linear infrared lamp refers to an infrared light that emits infrared radiation in a linear pattern. In the present disclosure, the term "vertical alignment" between the opposite ends of the infrared lamp and the opposite edges of the coating material may mean an essential co-alignment, i.e. may mean that when the infrared lamp is projected in a direction, perpendicular to the coating material, the infrared lamp is disposed such that the opposite ends of the projected infrared lamp correspond to the opposite edges of the coating material. Here, the term "substantial" may include a tolerance range, for example the tolerance range may be ±25 mm in a width direction of the coating material; and/or the term "substantial" may include the linear infrared lamp to have a connection connector, in which case a portion of the infrared lamp, substantially emitting infrared light, may start in a position spaced a predetermined distance apart from the connection connector of the infrared lamp.

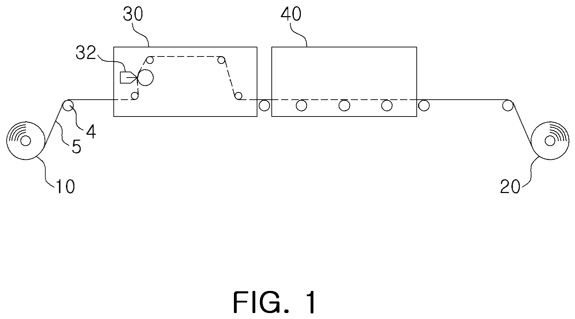

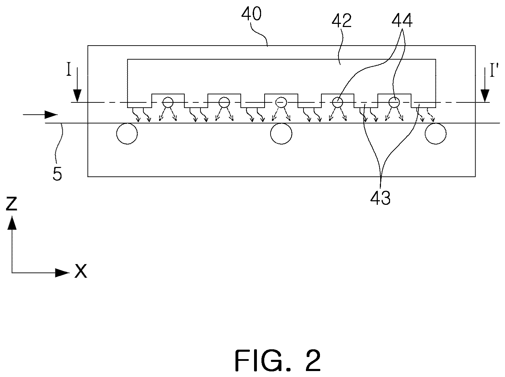

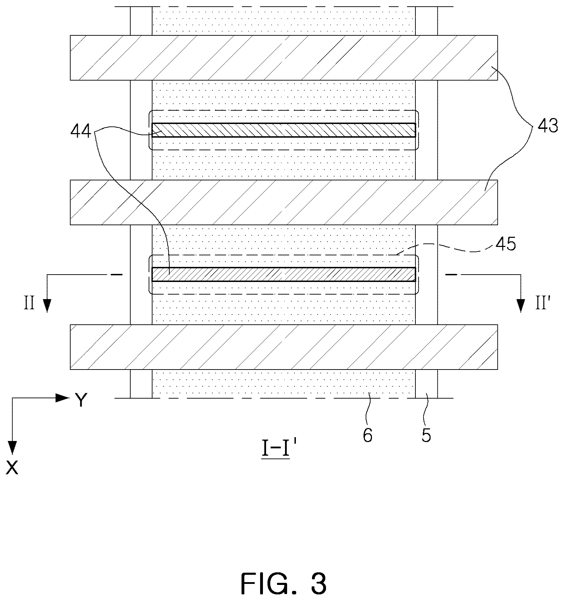

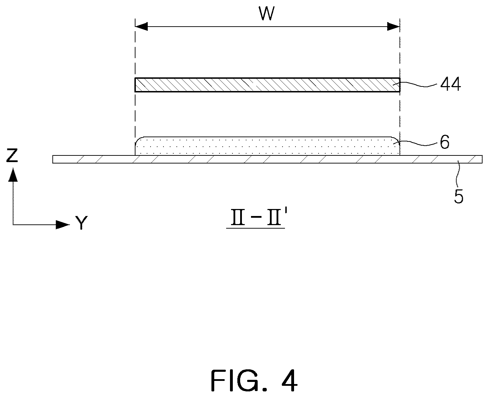

FIG. 1 is a schematic diagram illustrating an electrode manufacturing system according to an embodiment of the disclosed technology. FIG. 2 is a diagram illustrating the drying portion of FIG. 1. FIG. 3 is a cross-sectional view taken along line I-I' of FIG. 2. FIG. 4 is a cross-sectional view taken along line II-II' of FIG. 3.

Referring to FIGS. 1 to 4, a secondary battery electrode manufacturing system according to the present embodiment may include an unwinder 10 unwinding and supplying a coating substrate 5 (i.e. a substrate to be coated), a coating portion 30 coating a coating material 6 on a coating region of the coating substrate 5, a drying portion 40 drying the coating material 6, and a rewinder 20 rewinding the coating substrate 5.

In the present embodiment, the coating substrate 5 may be provided in the form of a thin strip having a predetermined width, and may refer to a metal thin film for manufacturing an electrode for a secondary battery. For example, the coating substrate 5 may be an aluminum sheet or thin film when a positive electrode is manufactured, and may be a copper sheet or thin film when a negative electrode is manufactured.

The coating substrate 5 may be supplied by the unwinder 10, may travel along a preset path, and may then be rewound by the rewinder 20. In this process, the coating substrate 5 may sequentially pass through the coating portion 30 and the drying portion 40. To this end, the electrode manufacturing system according to the present embodiment may include a transfer device transferring the coating substrate 5 in the above-described order. For example, the transfer device may include a plurality of rollers 4 rotating while supporting the coating substrate 5.

The unwinder 10 may unwind the coating substrate 5 wound in the form of a roll, and may supply the coating substrate 5 to the coating portion 30. As described above, the coating substrate 5, supplied by the unwinder 10, may be a metal sheet or thin film, such as an aluminum sheet or thin film or a copper sheet or thin film.

The coating portion 30 may coat the coating material 6 on the coating substrate 5 that is supplied by the unwinder 10 and travelling along a path. To this end, the coating portion 30 may have a slot die coater 32, but the present disclosure is not limited thereto.

The coating material 6 may be an active material that is in a slurry state, and a coating process may be performed in the same form for both the positive and negative electrodes. In the present embodiment, a case in which the coating material 6 is coated only on one surface of the coating substrate 5 is described as an example, but the coating material 6 may be coated on opposite surfaces of the coating substrate 5, as necessary.

The drying portion 40 may dry the coating material 6 after it has been applied on the coating substrate 5. The drying portion 40 may have at least one chamber through which the coating substrate 5 passes, and may remove moisture from the coating material 6 by applying heat to the coating material 6, passing through the chamber. To this end, the drying portion 40 according to the present embodiment may include a first heat source and a second heat source.

The first heat source and the second heat source may be different types of heat sources. For example, the first heat source may include a hot air supply device 42, supplying, to the coating material 6, hot air that is at a preset temperature. In addition, the second heat source may include a heater, applying radiant heat to the coating material 6.

In the drying portion 40 according to the present embodiment, heat energy, supplied by the first heat source, and heat energy, supplied from the second heat source, may be alternately supplied to the coating material 6. As illustrated in FIG. 2, the first heat source may have a plurality of hot air supply nozzles 43 that spray the hot air to the coating material, and the plurality of hot air supply nozzles 43 may be spaced apart from each other at regular intervals. And a plurality of second heat sources may be disposed between the plurality of hot air supply nozzles 43 in a distributed manner.

In the present embodiment, an infrared lamp 44 may be used as the second heat source. For example, the second heat source may include at least one linear infrared lamp 44 configured to irradiate the coating material with infrared light. Accordingly, in the drying portion 40, the plurality of hot air supply nozzles 43 and a plurality of infrared lamps 44 may be alternately disposed in a direction of travelling of the coating substrate 5, and the coating material 6, coated on the coating substrate 5, may be repeatedly and alternately heated by high-temperature hot air and infrared light to remove a solvent.

As illustrated in FIG. 3, in the present embodiment, the infrared lamp 44 may be disposed between two hot air supply nozzles 43. Accordingly, one irradiation region 45 may be formed between the two hot air supply nozzles 43. For example, the one irradiation region 45 may refer to a region of the coating material 6 in which infrared light, emitted by one or a plurality of infrared lamps 44 positioned between the two hot air supply nozzles 43, is irradiated.

When process speed is increased to increase production speed of an electrode, the coating material 6 may be unevenly dried. When an amount of hot air supplied or an output of the infrared lamp 44 is increased in consideration thereof, cracks may occur in a side surface portion of the coating material 6.

Accordingly, the present applicant modified a linear infrared lamp 44, the second heat source, into various shapes, and confirmed a state in which the coating material 6 is dried.

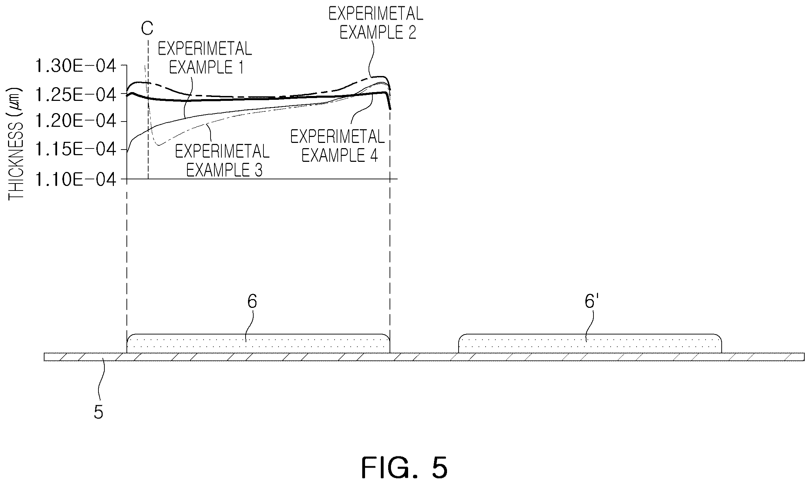

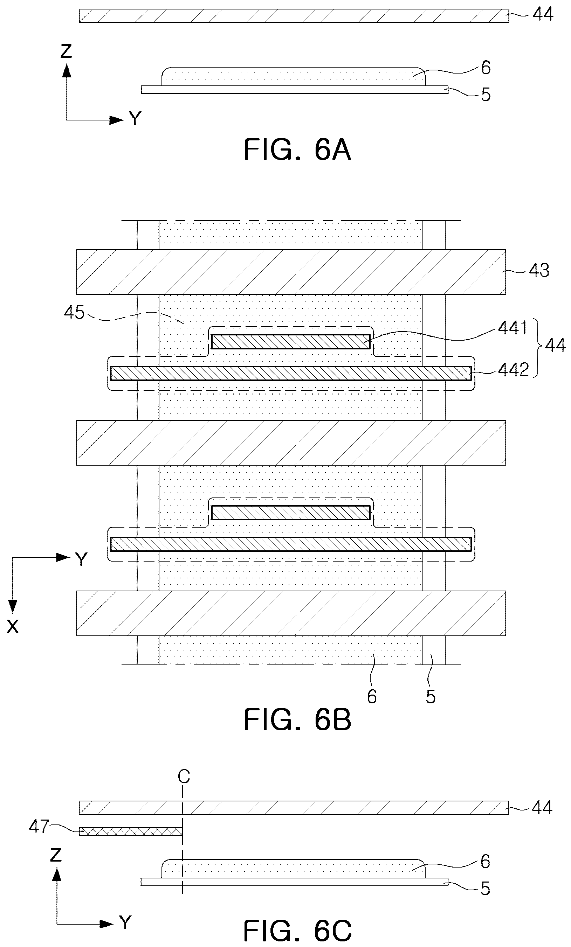

FIG. 5 is a graph illustrating thicknesses of a coating material according to various types of infrared lamps, and FIG. 6A to 6C are diagrams illustrating each experimental example of FIG. 3.

Here, FIG. 5 illustrates, in a process of forming an electrode by coating coating materials 6 and 6' on two regions of one coating substrate 5, a variation in thickness of the coating material 6 obtained by performing measurement on a cross-section of the coating material 6 coated on a left region, among coating materials 6 and 6' coated on the two regions of the one coating substrate 5. In addition, FIGS. 6A and 6C illustrate cross-sections corresponding to II-II' of FIG. 3, and FIG. 6B illustrates a cross-section corresponding to I-I' of FIG. 2.

Referring to FIGS. 5 to 6C together, in Experimental Example 1 for comparison, as illustrated in FIG. 6A, a length of the infrared lamp 44 may be formed to be longer than a width of the coating substrate 5. Accordingly, the infrared lamp 44 may be disposed such that at least a portion of the infrared lamp 44 protrudes toward the outside of the coating substrate 5.

Referring to the graph of Experimental Example 1, it can be seen that the coating material 6 had a gradually increasing thickness toward a right side of the coating material 6. From such a result, it can be inferred that the coating material 6 of Experimental Example 1 had a high dryness at a left edge thereof and a low dryness at a right edge thereof.

Such a result may be due to a larger amount of heat being applied to the left edge of the coating material 6 as the infrared lamp 44 was disposed up to the outside of the coating substrate 5. It can be seen that a corresponding portion was overdried.

In Experimental Example 2 for comparison, as illustrated in FIG. 6B, two infrared lamps 441 and 442 having different lengths were disposed to irradiate one irradiation region 45. A long lamp 442 was formed to be similar to the infrared lamp 44 applied in Experimental Example 1, and a short lamp 441 was formed to have a length shorter than a width of the coating material 6, such that the entire short lamp 441 was disposed in a central portion of the coating material 6 to oppose the coating material 6. In addition, as the two infrared lamps 441 and 442 were used, outputs of the long lamp 442 and the short lamp 441 were lowered, as compared to Experimental Example 1.

Referring to the graph of Experimental Example 2, it can be seen that a thickness variation of the coating material 6 was reduced, as compared to Experimental Example 1. However, it can be seen that a thickness of a central portion of the coating material 6 was reduced as compared to an edge portion of the coating material 6, adjacent to the coating substrate 5. That is, it can be seen that Experimental Example 2 had a reduced thickness variation as compared to Experimental Example 1 due to a second lamp 44 additionally disposed on the central portion of the coating material 6, but a thickness variation between the central portion and opposite edge portions, adjacent to the coating substrate 5, occurred.

Accordingly, in Experimental Example 2, it can be determined that the thin central portion was overdried or the thick edge portion was underdried.

In Experimental Example 3 for comparison, as illustrated in FIG. 6C, in addition to the configuration of Experimental Example 1, a shielding plate 47 was disposed along an edge of the coating material 6, that is, a boundary between the coating material 6 and the coating substrate 5. A dotted line C of FIG. 5 may refer to a right boundary C of the shield plate 47 of FIG. 6C. The shielding plate 47 was disposed between the infrared lamp 44 and the coating substrate 5, and at least a portion of the shielding plate 47 was disposed to oppose the coating material 6.

In Experimental Example 3, the shielding plate 47 was applied to compensate for overdrying of a specific region in Experimental Example 1. An overall graph shape of Experimental Example 3 may be similar to that of Experimental Example 1. However, it can be seen that a portion of the coating material 6, opposing the shielding plate 47, had a rapidly increasing thickness. That is, it can be confirmed that heat from the infrared lamp 44 was excessively blocked by the shielding plate 47 and the heat was not properly transmitted to a left edge of the coating material 6.

In Experimental Example 4 as illustrated in FIGS. 3 and 4, the length of the infrared lamp 44 was formed to be the same as the width W of the coating material 6. Specifically, in Experimental Example 4, the infrared lamp 44 was disposed such that opposite ends of the infrared lamp 44 were vertically aligned with opposite edges of the coating material 6. Here, vertical alignment may mean that when the infrared lamp 44 is projected in a direction, perpendicular to the coating material 6, the infrared lamp 44 is disposed such that the opposite ends of the projected infrared lamp 44 correspond to the opposite edges of the coating material 6. That is, it can be understood that the opposite ends of the infrared lamp 44 were disposed to be in contact with vertical lines formed by the opposite edges of the coating material 6. Referring to the graph of Experimental Example 4, it can be seen that the coating material 6 had a small thickness variation and an overall similar thickness. Accordingly, it can be seen that the coating material 6 was most evenly dried when the infrared lamp 44 was disposed such that the opposite ends of the infrared lamp 44 corresponded to the opposite edges of the coating material 6.

In Experimental Example 4, an irradiation region 45 was formed as illustrated in FIG. 3, such that a relatively small amount of infrared light was irradiated to the opposite edge portions of the coating material 6. Accordingly, an even amount of infrared light irradiated was not irradiated to the coating material 6. However, as confirmed through the above-described experimental examples, in a drying method using the infrared lamp 44, the edge portions of the coating material 6 tend to be dried more than the central portion. Accordingly, it can be understood that the overall coating material 6 was evenly dried when a relatively small amount of infrared light was applied to the edge of the coating material 6.

Accordingly, in an electrode manufacturing system according to the present embodiment, the infrared lamp 44, a second heat source, may be formed as a linear lamp 44, and the opposite ends of the infrared lamp 44 may be disposed to correspond to the opposite edges of the coating material 6, considering the above-described Experimental Example 4 as an optimal drying condition.

Even when drying is performed under the same condition, a state in the coating material 6 is dried may be changed depending on an output of the infrared lamp 44 and an amount of heat energy transmitted to the coating material 6. Accordingly, the output of the infrared lamp 44 or a distance between the infrared lamp 44 and the coating material 6 may be properly changed depending on a composition, thickness, traveling speed, or the like of the coating material 6.

However, as the infrared lamp 44 is farther from the coating material 6, infrared light irradiated by the infrared lamp 44 may be diffused. Thus, when the infrared lamp 44 is disposed to be excessively far apart from the coating material 6, the irradiation region 45 may be excessively expanded. For example, even when the infrared lamp 44 is disposed as in Experimental Example 4, the irradiation region 45 may be formed to be similar to that in Experimental Example 1 when the infrared lamp 44 is disposed to be excessively far apart from the coating material 6. In addition, when the infrared lamp 44 is excessively close to the coating material 6, the irradiation region 45 of the infrared light may become narrow, such that drying may not be efficiently performed.

In consideration thereof, in the present disclosure and in the present embodiment, a separation distance between the infrared lamp 44 and the coating material 6 may be formed within a range of 5 cm to 10 cm. However, the present embodiment is not limited thereto, and the separation distance may be adjusted such that the irradiation range is not beyond the coating substrate 5.

In addition, in general, a region of the infrared lamp 44, substantially emitting infrared light, may be smaller than an entire region of the infrared lamp 44. For example, at least one of the opposite ends of the infrared lamp 44 may have a connection connector. In this case, a portion of the infrared lamp 44, substantially emitting infrared light, may start in a position spaced a predetermined distance apart from the connection connector of the infrared lamp 44. Accordingly, in the present embodiment, the opposite ends of the infrared lamp 44 may refer to opposite ends of the region of the infrared lamp 44, substantially emitting infrared light.

In addition, in the present disclosure and in the present embodiment, vertical alignment between the opposite ends of the infrared lamp 44 and the opposite edges of the coating material 6 may include a tolerance range. For example, the tolerance range may be ±25 mm in a width direction of the coating material 6.

The electrode manufacturing system according to the present embodiment, configured as described above, may evenly dry the coating material 6 even when travelling speed of the coating substrate 5 to which the coating material 6 is applied is increased, thereby increasing product yield.

Hereinafter, embodiments of the present disclosure will be further described with reference to specific experimental examples. Examples and comparative examples included in the experimental examples are merely illustrative of the present disclosure and do not limit the scope of the appended patent claims. It will be apparent to those skilled in the art that various changes and modifications could be made.

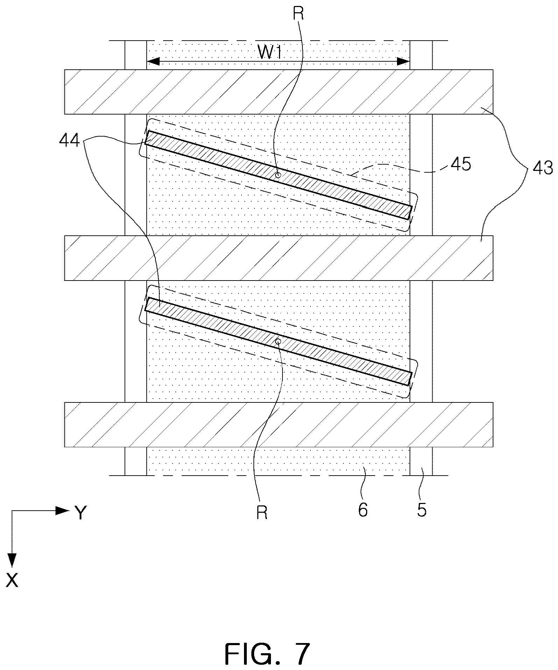

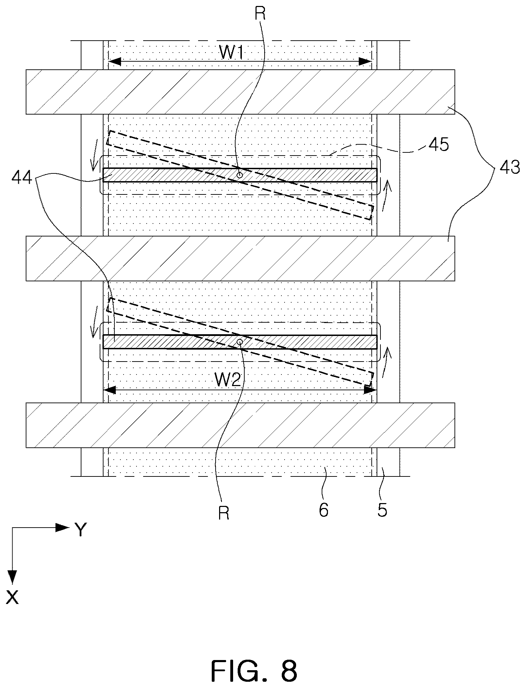

FIGS. 7 and 8 are schematic diagrams illustrating an electrode manufacturing system according to the present invention, and illustrate a cross-section corresponding tc that of FIG. 3.

Referring to FIGS. 7 and 8, an infrared lamp 44 according to the present embodiment is rotatably disposed on an upper portion of a coating material 6.

Specifically, a rotational axis R may be formed on a central portion of each infrared lamp 44 in a longitudinal direction, and the infrared lamp 44 may be rotated along the rotational axis R. The rotational axis R may be disposed in a direction, perpendicular to a direction of a surface (for example, an X-Y plane) of a coating substrate 5. The infrared lamp 44 may be rotated through various known rotational driving devices, such as motors.

As the infrared lamp 44 is rotatably disposed, the infrared lamp 44 according to the present embodiment may be disposed in a diagonal direction, oblique to a width direction (for example, a Y-direction) of the coating material 6, as illustrated in FIG. 7, or may be disposed to be parallel to the width direction of the coating material 6, as illustrated in FIG. 8.

The infrared lamp 44 according to the present embodiment may be rotated to correspond to a width of the coating material 6. For example, as illustrated in FIG. 7, when the width of the coating material 6 is W1, the infrared lamp 44 may be disposed in the diagonal direction, oblique to the width direction of the coating material 6, to correspond to the width of the coating material 6. Accordingly, opposite ends of the infrared lamp 44 may be disposed to correspond to opposite edges of the coating material 6.

In addition, as illustrated in FIG. 8, when the width of the coating material 6 is W2, the infrared lamp 44 may be rotated, and accordingly the opposite ends of the infrared lamp 44 may be disposed to correspond to the opposite edges of the coating material 6.

The electrode manufacturing system according to the present embodiment, described above, may perform drying using the same infrared lamp 44 even when the width of the coating material 6 is changed, such that electrodes having various sizes may be manufactured using one electrode manufacturing system.

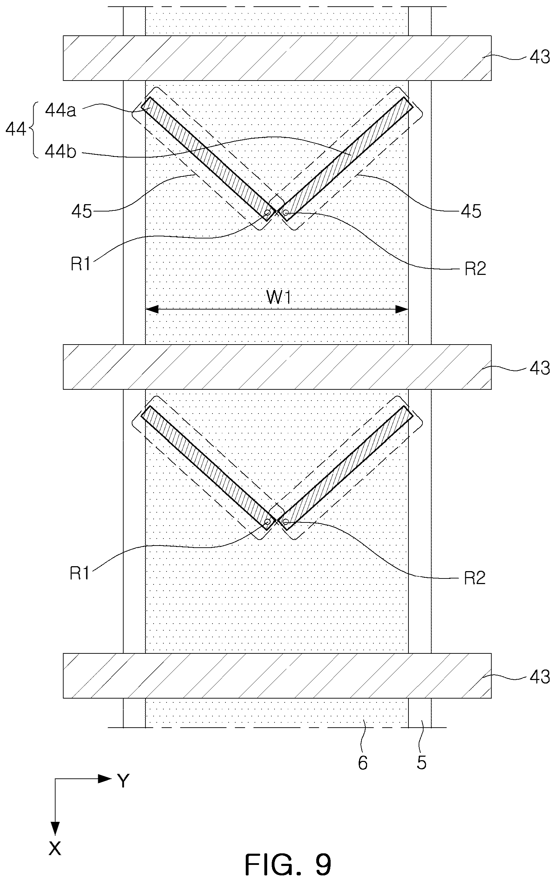

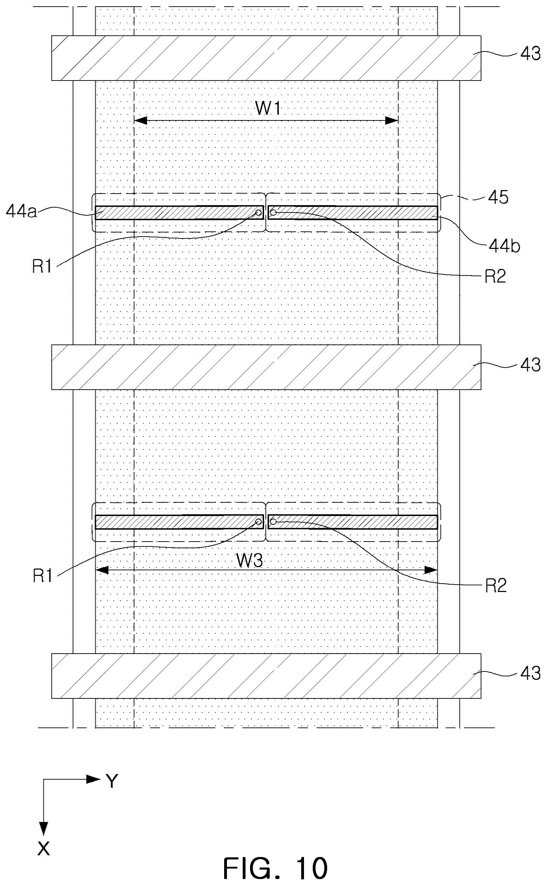

FIGS. 9 and 10 are schematic diagrams illustrating an electrode manufacturing system according to another embodiment.

Referring to FIGS. 9 and 10, in the electrode manufacturing system according to the present embodiment, a plurality of infrared lamps 44a and 44b may form one irradiation region 45. In addition, two infrared lamps 44a and 44b may be rotatably disposed, respectively.

Specifically, the infrared lamps 44a and 44b, irradiating the irradiation region 45, may include a first lamp 44a and a second lamp 44b, and the first lamp 44a and the second lamp 44b may be rotated along different rotation axes R1 and R2, respectively. A first rotational axis R1, a rotational axis of the first lamp 44a, may be positioned at one end of the first lamp 44a, and a second rotational axis R2, a rotational axis of the second lamp 44b, may be positioned at the other end of the second lamp 44b. For example, the first rotational axis R1 and the second rotational axis R2 may be formed at an end disposed on the inside of the coating material 6, among opposite ends of the lamps 44a and 44b, respectively. Accordingly, the first rotational axis R1 and the second rotational axis R2 may be disposed to be adjacent to each other, and may be disposed on a straight line, parallel to a width direction of the coating material 6.

In a similar manner to the above-described embodiment, each of the rotation axes R1 and R2 may be disposed in a direction, perpendicular to a direction of a surface (for example, an X-Y plane) of a coating substrate 5, and the first lamp 44a and the second lamp 44a may be rotated through various known rotational driving devices, such as motors.

The first lamp 44a and the second lamp 44b according to the present embodiment may be disposed in a "V" shape, as illustrated in FIG. 9, or may be disposed to form a straight line parallel to the width direction of the coating material 6, as illustrated in FIG. 10.

In a similar manner to the above-described embodiment, the infrared lamp 44 according to the present embodiment may also be rotated to correspond to a width of the coating material 6. For example, as illustrated in FIG. 9, when the width of the coating material 6 is W1, the infrared lamp 44 may be disposed in a "V" shape to correspond to a width of the coating substrate 5, and the other end of the first lamp 44a and one end of the second lamp 44b may be positioned on the opposite edges of the coating material 6. Here, W1 may be shorter than a total length of the first lamp 44a and the second lamp 44b.

In addition, as illustrated in FIG. 10, when the width of the coating material 6 is W3, the first lamp 44a and the second lamp 44b may be rotated to be disposed on a straight line, parallel to the width direction of the coating material 6. Accordingly, opposite ends of the infrared lamp 44 may be disposed to correspond to opposite edges of the coating material 6 having a width W3.

As such, the electrode manufacturing system according to the present embodiment may manufacture an electrode by disposing the infrared lamps 44 in various shapes depending on the width of the coating material 6.

The features described above are merely examples of the application of the principles of the disclosed technology, and other components may be included in the disclosed technology.

For example, in the above-described embodiments, a case in which a coating material is coated only on one surface of a coating substrate is described as an example. However, the present disclosure is not limited thereto, and opposite surfaces of the coating substrate may be coated with the coating material. In this case, a first heat source and a second heat source may be disposed on the opposite surfaces of the coating substrate.

Only specific examples of implementations of certain embodiments are described. Variations, improvements and enhancements of the disclosed embodiments and other embodiments may be made based on the disclosure of this patent document. Furthermore, the embodiments may be combined to form additional embodiments.

## Claims

1. An electrode manufacturing system comprising a coating portion (30) configured to coat a coating material (6) on a coating substrate (5) traveling along a path; and a drying portion (40) configured to dry the coating material (6), wherein the drying portion (40) includes at least one linear infrared lamp (44; 44a, 44b) configured to irradiate the coating material (6) with infrared light, and opposite ends of at least one of the infrared lamp(s) (44; 44a, 44b) are disposed to be vertically aligned with opposite edges of the coating material (6),
**characterized in that** the at least one infrared lamp (44; 44a, 44b) is disposed to be rotatable along a rotational axis formed in a direction, perpendicular to a direction of a surface of the coating substrate (5).

2. The electrode manufacturing system of claim 1, wherein a separation distance between the infrared lamp (44; 44a, 44b) and the coating material (6) is 5 cm to 10 cm.

3. The electrode manufacturing system of claim 1, wherein the rotational axis is disposed in a central portion of the infrared lamp (44; 44a, 44b) in a longitudinal direction.

4. The electrode manufacturing system of claim 3, wherein the infrared lamp (44; 44a, 44b) is disposed in a diagonal direction, oblique to a width direction of the coating material (6), or is disposed to be parallel to the width direction of the coating material (6).

5. The electrode manufacturing system of claim 1, wherein
the infrared lamp (44; 44a, 44b) includes:
a first lamp (44a) rotating on a first rotational axis; and
a second lamp (44b) rotating on a second rotational axis,
the first rotational axis and the second rotational axis are disposed on a straight line, parallel to a width direction of the coating material (6).

6. The electrode manufacturing system of claim 5,
wherein
the first rotational axis is formed at one end of the first lamp (44a), and the second rotational axis is formed at the other end of the second lamp (44b), and
the other end of the first lamp (44a) and one end of the second lamp (44b) are positioned on the opposite edges of the coating material (6), respectively.

7. The electrode manufacturing system of claim 5, wherein the first lamp (44a) and the second lamp (44b) are disposed in a "V" shape, or are disposed to form a straight line.

8. The electrode manufacturing system any of claims 1 to 7, wherein the drying portion (40) further includes a hot air supply device (42) configured to supply hot air to the coating material (6).

9. The electrode manufacturing system of claim 8,
wherein
the hot air supply device (42) includes a plurality of hot air supply nozzles (43) configured to spray the hot air to the coating material (6), and
in the drying portion (40), the plurality of hot air supply nozzles (43) and a plurality of infrared lamps (44; 44a, 44b) are alternately disposed in a direction of traveling of the coating material (6).

10. The electrode manufacturing system of any one of claims 1 to 9, wherein the coating material (6) is a positive electrode active material or a negative electrode active material, and/or wherein the coating substrate (5) is a secondary battery electrode substrate, and the coating substrate (5) includes an aluminum sheet or a copper sheet.

11. Use of the electrode manufacturing system of any one of claims 1 to 10 for manufacturing a secondary battery electrode.

12. A method for manufacturing an electrode, in particular a secondary battery electrode, comprising the steps of
coating a coating material (6) on a coating substrate (5) traveling along a path; and
drying the coating material (6) coated on the coating substrate (5);
wherein the drying step includes drying by at least one linear infrared lamp (44; 44a, 44b), which irradiates the coating material (6) with infrared light,
wherein the opposite ends of at least one of the linear infrared lamp(s) (44; 44a, 44b) are aligned with opposite edges of the coating material (6), and
wherein the at least one infrared lamp (44; 44a, 44b) is disposed to be rotatable along a rotational axis formed in a direction, perpendicular to a direction of a surface of the coating substrate (5).

## Patentansprüche

1. Elektrodenherstellungssystem, umfassend einen Beschichtungsabschnitt (30), der dazu angepasst ist, ein Beschichtungsmaterial (6) auf ein Beschichtungssubstrat (5), das sich entlang eines Pfads bewegt, zu beschichten; und einen Trocknungsabschnitt (40), der dazu angepasst ist, das Beschichtungsmaterial (6) zu trocknen, wobei der Trocknungsabschnitt (40) mindestens eine lineare Infrarotlampe (44; 44a, 44b) beinhaltet, die dazu angepasst ist, das Beschichtungsmaterial (6) mit Infrarotlicht zu bestrahlen, und gegenüberliegende Enden von mindestens einer der Infrarotlampe(n) (44; 44a, 44b) angeordnet sind, um vertikal mit gegenüberliegenden Kanten des Beschichtungsmaterials (6) ausgerichtet zu sein,
**dadurch gekennzeichnet, dass** die mindestens eine Infrarotlampe (44; 44a, 44b) angeordnet ist, um entlang einer Drehachse, die in einer Richtung senkrecht zu einer Richtung einer Oberfläche des Beschichtungssubstrats (5) gebildet ist, drehbar zu sein.

2. Elektrodenherstellungssystem gemäß Anspruch 1, wobei ein Trennungsabstand zwischen der Infrarotlampe (44; 44a, 44b) und dem Beschichtungsmaterial (6) 5 cm bis 10 cm beträgt.

3. Elektrodenherstellungssystem gemäß Anspruch 1, wobei die Drehachse in einem zentralen Abschnitt der Infrarotlampe (44; 44a, 44b) in einer Längsrichtung angeordnet ist.

4. Elektrodenherstellungssystem gemäß Anspruch 3, wobei die Infrarotlampe (44; 44a, 44b) in einer diagonalen Richtung schräg zu einer Breitenrichtung des Beschichtungsmaterials (6) angeordnet ist, oder angeordnet ist, um parallel zu der Breitenrichtung des Beschichtungsmaterials (6) zu sein.

5. Elektrodenherstellungssystem gemäß Anspruch 1, wobei die Infrarotlampe (44; 44a, 44b) Folgendes beinhaltet:
eine erste Lampe (44a), die sich auf einer ersten Drehachse dreht; und
eine zweite Lampe (44b), die sich auf einer zweiten Drehachse dreht,
wobei die erste Drehachse und die zweite Drehachse auf einer geraden Linie parallel zu einer Breitenrichtung des Beschichtungsmaterials (6) angeordnet sind.

6. Elektrodenherstellungssystem gemäß Anspruch 5, wobei
die erste Drehachse an einem Ende der ersten Lampe (44a) ausgebildet ist und die zweite Drehachse an dem anderen Ende der zweiten Lampe (44b) ausgebildet ist, und
das andere Ende der ersten Lampe (44a) und ein Ende der zweiten Lampe (44b) jeweils auf den gegenüberliegenden Kanten des Beschichtungsmaterials (6) positioniert sind.

7. Elektrodenherstellungssystem gemäß Anspruch 5, wobei die erste Lampe (44a) und die zweite Lampe (44b) in einer "V"-Form angeordnet sind, oder angeordnet sind, um eine gerade Linie zu bilden.

8. Elektrodenherstellungssystem gemäß einem der Ansprüche 1 bis 7, wobei der Trocknungsabschnitt (40) ferner eine Heißluftzufuhrvorrichtung (42) beinhaltet, die dazu angepasst ist, dem Beschichtungsmaterial (6) Heißluft zuzuführen.

9. Elektrodenherstellungssystem gemäß Anspruch 8, wobei
die Heißluftzufuhrvorrichtung (42) eine Vielzahl von Heißluftzufuhrdüsen (43) beinhaltet, die dazu angepasst sind, die Heißluft auf das Beschichtungsmaterial (6) zu sprühen, und
in dem Trocknungsabschnitt (40) die Vielzahl von Heißluftzufuhrdüsen (43) und eine Vielzahl von Infrarotlampen (44; 44a, 44b) abwechselnd in einer Bewegungsrichtung des Beschichtungsmaterials (6) angeordnet sind.

10. Elektrodenherstellungssystem gemäß einem der Ansprüche 1 bis 9, wobei das Beschichtungsmaterial (6) ein Positivelektrodenaktivmaterial oder ein Negativelektrodenaktivmaterial ist, und/oder wobei das Beschichtungssubstrat (5) ein Sekundärbatterieelektrodensubstrat ist und das Beschichtungssubstrat (5) ein Aluminiumblech oder ein Kupferblech beinhaltet.

11. Verwendung des Elektrodenherstellungssystems gemäß einem der Ansprüche 1 bis 10 zum Herstellen einer Sekundärbatterieelektrode.

12. Verfahren zum Herstellen einer Elektrode, insbesondere einer Sekundärbatterieelektrode, umfassend die Schritte des
Beschichtens eines Beschichtungsmaterials (6) auf ein Beschichtungssubstrat (5), das sich entlang eines Pfads bewegt; und
Trocknens des Beschichtungsmaterials (6), das auf das Beschichtungssubstrat (5) beschichtet ist;
wobei der Trocknungsschritt das Trocknen durch mindestens eine lineare Infrarotlampe (44; 44a, 44b) beinhaltet, die das Beschichtungsmaterial (6) mit Infrarotlicht bestrahlt,
wobei die gegenüberliegenden Enden von mindestens einer der linearen Infrarotlampe(n) (44; 44a, 44b) mit gegenüberliegenden Kanten des Beschichtungsmaterials (6) ausgerichtet sind, und
wobei die mindestens eine Infrarotlampe (44; 44a, 44b) angeordnet ist, um entlang einer Drehachse, die in einer Richtung senkrecht zu einer Richtung einer Oberfläche des Beschichtungssubstrats (5) gebildet ist, drehbar zu sein.

## Revendications

1. Système de fabrication d'électrode comprenant une partie de revêtement (30) configurée pour revêtir un matériau de revêtement (6) sur un substrat de revêtement (5) se déplaçant le long d'un trajet; et une partie de séchage (40) configurée pour sécher le matériau de revêtement (6), où la partie de séchage (40) comprend au moins une lampe infrarouge linéaire (44 ; 44a, 44b) configurée pour irradier le matériau de revêtement (6) avec une lumière infrarouge, et des extrémités opposées d'au moins l'une de la ou des lampes infrarouges (44 ; 44a, 44b) sont disposées pour être alignées verticalement avec des bords opposés du matériau de revêtement (6),
**caractérisé en ce que** l'au moins une lampe infrarouge (44 ; 44a, 44b) est disposée pour pouvoir tourner le long d'un axe de rotation formé dans une direction, perpendiculaire à une direction d'une surface du substrat de revêtement (5).

2. Système de fabrication d'électrode selon la revendication 1, où une distance de séparation entre la lampe infrarouge (44 ; 44a, 44b) et le matériau de revêtement (6) est de 5 cm à 10 cm.

3. Système de fabrication d'électrode selon la revendication 1, où l'axe de rotation est disposé dans une partie centrale de la lampe infrarouge (44 ; 44a, 44b) dans une direction longitudinale.

4. Système de fabrication d'électrode selon la revendication 3, où la lampe infrarouge (44 ; 44a, 44b) est disposée dans une direction diagonale, oblique par rapport à une direction de largeur du matériau de revêtement (6), ou est disposée pour être parallèle à la direction de largeur du matériau de revêtement (6).

5. Système de fabrication d'électrode selon la revendication 1, où la lampe infrarouge (44 ; 44a, 44b) comprend :
une première lampe (44a) tournant sur un premier axe de rotation ; et
une deuxième lampe (44b) tournant sur un deuxième axe de rotation,
le premier axe de rotation et le deuxième axe de rotation sont disposés sur une ligne droite, parallèle à une direction de largeur du matériau de revêtement (6).

6. Système de fabrication d'électrode selon la revendication 5, où
le premier axe de rotation est formé à une extrémité de la première lampe (44a), et le deuxième axe de rotation est formé à l'autre extrémité de la deuxième lampe (44b), et
l'autre extrémité de la première lampe (44a) et une extrémité de la deuxième lampe (44b) sont positionnées sur les bords opposés du matériau de revêtement (6), respectivement.

7. Système de fabrication d'électrode selon la revendication 5, où la première lampe (44a) et la deuxième lampe (44b) sont disposées en forme de « V », ou sont disposées pour former une ligne droite.

8. Système de fabrication d'électrode selon l'une quelconque des revendications 1 à 7, où la partie de séchage (40) comprend en outre un dispositif d'alimentation en air chaud (42) configuré pour fournir de l'air chaud au matériau de revêtement (6).

9. Système de fabrication d'électrode selon la revendication 8, où
le dispositif d'alimentation en air chaud (42) comprend une pluralité de buses d'alimentation en air chaud (43) configurées pour pulvériser l'air chaud sur le matériau de revêtement (6), et
dans la partie de séchage (40), la pluralité de buses d'alimentation en air chaud (43) et une pluralité de lampes infrarouges (44 ; 44a, 44b) sont disposées en alternance dans une direction de déplacement du matériau de revêtement (6).

10. Système de fabrication d'électrode selon l'une quelconque des revendications 1 à 9, où le matériau de revêtement (6) est un matériau actif d'électrode positive ou un matériau actif d'électrode négative, et/ou où le substrat de revêtement (5) est un substrat d'électrode de batterie secondaire, et le substrat de revêtement (5) comprend une feuille d'aluminium ou une feuille de cuivre.

11. Utilisation du système de fabrication d'électrode selon l'une quelconque des revendications 1 à 10 pour fabriquer une électrode de batterie secondaire.

12. Procédé de fabrication d'une électrode, en particulier d'une électrode de batterie secondaire, comprenant les étapes consistant à
revêtir un matériau de revêtement (6) sur un substrat de revêtement (5) se déplaçant le long d'un trajet ; et
sécher le matériau de revêtement (6) revêtu sur le substrat de revêtement (5) ;
où l'étape de séchage comprend un séchage par au moins une lampe infrarouge linéaire (44 ; 44a, 44b), qui irradie le matériau de revêtement (6) avec une lumière infrarouge,
où les extrémités opposées d'au moins l'une de la ou des lampes infrarouges linéaires (44 ; 44a, 44b) sont alignées avec des bords opposés du matériau de revêtement (6), et
où l'au moins une lampe infrarouge (44 ; 44a, 44b) est disposée pour pouvoir tourner le long d'un axe de rotation formé dans une direction, perpendiculaire à une direction d'une surface du substrat de revêtement (5).
